# FASCICULE DE BREVET EUROPEEN

(11) **EP 1 209 004 B1**
(45) Date de publication et mention de la délivrance du brevet: **14.01.2009**
(21) Numéro de dépôt: 02002115.0
(22) Date de dépôt: 09.11.1999
(51) Int. Cl.: B43K 7/01

(54) **Piston suiveur d'encre pour stylo à bille**
Folgekolben für ein Kugelschreibgerät
Ink-following plunger for ballpoint pen

(30) Priorité: 09.11.1998 FR 9814059
(43) Date de publication de la demande: 29.05.2002
(62) Demande divisionnaire de: 99971764.8
(73) Titulaire: Société BIC, 92110 Clichy (FR)
(72) Inventeur: Lerch, Jean-Phillipe, 68620 Burnhapt-Le-Bas (FR); Duez, José, 62200 Boulogne Sur Mer (FR); Bocquenet, Frédéric, 68190 Umgersheim (FR)
(74) Mandataire: Hennion, Jean-Claude

(56) Documents cités:
- EP-A- 0 626 276
- FR-A- 1 589 326
- FR-A- 2 709 444

## Description

L'invention concerne un piston suiveur d'encre pour stylo à bille.

Ce type de piston comprend un élément gélifié, contenant optionnellement un élément solide et plus particulièrement destiné à être utilisé en combinaison avec une encre de viscosité comprise entre 10 et 30 000 mPa.s (ou présentant des propriétés rhéofluidifiantes), placée dans un réservoir équipé à l'une de ses extrémités d'une pointe d'écriture.

La gamme des encres pour stylos-bille peut être décomposée en trois principaux groupes comprenant :
- les encres aqueuses liquides de faible viscosité, utilisées dans des articles d'écriture dont la régulation de débit est assurée au moyen d'un système de chicanes ou d'un réservoir fibreux,
- les encres à haute viscosité en phase solvant, utilisées dans des réservoirs tubulaires alimentant directement la pointe ; le débit des stylos étant ajusté en modifiant la viscosité de l'encre,
- les encres aqueuses de viscosité moyenne, utilisées dans des réservoirs tubulaires alimentant directement la pointe.

Dans ce dernier groupe, il est nécessaire d'éviter l'écoulement de l'encre par l'arrière de la cartouche réservoir en plaçant au-dessus de la colonne d'encre un piston suiveur. Ce piston, insoluble dans l'encre et généralement constitué d'un bouchon de graisse, permet également de limiter l'évaporation des solvants volatils contenus dans l'encre (l'eau en particulier), et dans une certaine mesure de réguler le débit du stylo-bille. Par ailleurs, lors de l'utilisation du stylo, le piston suit la colonne d'encre dans le tube, d'où la qualification de suiveur, évitant ainsi des dépôts d'encre résiduelle sur les parois du réservoir.

Dans l'état de la technique, on mentionne différentes compositions chimiques utilisées comme piston suiveur et formulées à partir d'un ou plusieurs solvant(s) organique(s) peu volatil(s), en particulier le polybutène, et d'un agent épaississant de type di- ou tribenzylidène sorbitol (JP 6220418) pour former une graisse correspondant à un état pâteux réversible obtenu par l'établissement de liaisons internes physiques (liaisons hydrogène et/ou liaisons de Van der Wals...). Afin de garantir leur tenue dans le tube, quelles que soient les conditions de stockage des stylos, ces compositions présentent généralement une viscosité importante. En outre, au cours de l'utilisation du stylo, ces graisses ont tendance à adhérer aux parois du tube en dégradant l'aspect esthétique du réservoir. Par ailleurs, cette adhérence entraîne une perte de matière ou une déformation du piston provoquant ainsi un dysfonctionnement du système avec des risques d'écoulement de l'encre par l'arrière du tube, et d'évaporation des solvants volatils contenus dans l'encre. Par ailleurs, en cas de choc, la viscosité importante de ces pistons suiveurs peut conduire à une désolidarisation de la colonne d'encre et du piston, provoquant des interruptions, voire un arrêt complet de l'écriture.

Afin de limiter les effets négatifs dus à la viscosité du piston suiveur, différentes voies ont été explorées. Parmi celles-ci, il convient de relever l'incorporation dans les graisses précédemment citées, d'un additif, de type poly(siloxane) modifié polyéther (US 5 348 989), ou des composés polaires (WO 9804421), destinés à améliorer le glissement le long du tube, et à garantir un meilleur contact encre/suiveur en particulier en cas de choc.

Une autre solution envisagée dans le US 4 671 691 consiste à formuler des compositions de graisses viscoélastiques, à base d'huile minérale, de polybutène, et d'argiles organophiles traitées onium. Ces compositions, de viscosité élevée au repos, peuvent se fluidifier sensiblement sous l'effet d'une contrainte (écoulement normal dans un tube ou déplacement rapide du piston suiveur en cas de choc) pour un meilleur suivi de l'encre.

Toutefois, les valeurs de viscosité de ces graisses, même après cisaillement, restent relativement élevées, ce qui gêne leur transfert, en particulier au moment du remplissage des cartouches.

D'autre part, ces graisses, réalisées à partir d'un mélange d'huile minérale et de polybutène, subissent d'importantes variations de leur viscosité en fonction de la température, ce qui pour un stylo stocké dans des conditions très variables et parfois sévères (climats tropicaux, plage arrière d'une voiture...) peut entraîner une liquéfaction du bouchon de graisse et conduire à un écoulement de l'encre par l'arrière.

Le remplacement du mélange (huile minérale + polybutène), par des huiles de silicones épaissies par du silicate d'aluminium comme, par exemple, dans le EP 0 792 759, forme toujours une graisse dont la viscosité est toutefois moins sensible aux variations de température.

Cependant, certains problèmes techniques subsistent. Ainsi, l'introduction de ces compositions, de viscosité encore élevée, dans les cartouches reste difficile, et ceci d'autant plus que le diamètre du tube est faible. En outre, la flexibilité de toutes les solutions proposées reste limitée, puisque leurs propriétés doivent être adaptées aux caractéristiques du stylo envisagé, ce qui nécessite une reformulation longue et complète du piston suiveur pour chaque stylo.

Par ailleurs, ces graisses forment des pistons dont la trop grande capacité de déformation a tendance à perturber la qualité de l'écriture. En outre, ces graisses sont opaques, ce qui rend le piston apparent dans des tubes/réservoirs translucides ou transparents, ce qui n'est pas satisfaisant sur le plan esthétique.

Enfin, lorsque le piston suiveur comporte aussi un élément solide (comme dans le FR 2 709 444), ce dernier est réalisé nécessairement avec des pores fermés car la viscosité des graisses est trop importante pour qu'elles puissent pénétrer dans des pores ouvert. Cette configuration rend l'élément solide flottant et donc particulièrement instable.

Les pistons suiveurs développés dans le cadre de la présente invention ont pour but de résoudre les problèmes techniques inhérents à l'utilisation des pistons suiveurs traditionnels.

Ce but est atteint conformément à l'invention telle que definie dans la revendication 1. Selon un premier mode de réalisation d'un piston suiveur pour stylo à bille comprenant notamment un élément sous forme d'un gel stable dont la dureté mesurée par pénétration de cône est comprise entre 100.10⁻¹ mm et 400.10⁻¹ mm.

Selon une variante particulière, l'élément en gel est formé à partir d'un milieu réactionnel contenant au moins un composant liquide choisi parmi les polymères siliconés, les polyuréthannes, les polyesters et les résines époxy.

De préférence, milieu réactionnel contient un premier composant liquide et un second composant liquide de même nature chimique susceptibles de participer à une réaction chimique de condensation ou d'addition et notamment d'hydrosilylation.

Selon un mode de réalisation spécifique, le premier composant liquide est constitué d'au moins un polymère siliconé pourvu d'au moins deux fonctions éthyléniques insaturées.

Selon un autre mode de réalisation, le second composant liquide est constitué d'au moins un polymère siliconé pourvu d'au moins deux fonctions (Si-H).

Selon une caractéristique avantageuse, le rapport molaire dans le milieu réactionnel des fonctions éthyléniques insaturées du premier composant aux fonctions (Si-H) du second composant est compris entre 1:5 et 5:1, et de préférence, compris entre 1:3 et 3:1.

Selon une autre variante, le piston suiveur comporte, en outre, un agent d'hydrosilylation à base de platine en une quantité telle que la teneur en platine soit comprise entre 0,1 et 1000 ppm.

Selon une caractéristique avantageuse, la fonction éthylénique insaturée est localisée aux deux extrémités de la chaîne du polymère siliconé du premier composant.

Selon une autre caractéristique, ledit polymère siliconé à fonction Si-H du second composant est un copolymère de diméthylsiloxane et de méthylhydrosiloxane.

Selon encore une autre variante, le piston comprend, en outre, un agent diluant constitué d'au moins un polymère siliconé inerte tel que du poly(diméthylsiloxane) à terminaison triméthylsiloxy.

Selon une variante spécifique, le piston comprend en outre, au moins un agent lubrifiant choisi parmi les huiles minérales blanches et les huiles isoparaffiniques et/ou les matières grasses telles que les esters d'acides gras, les esters d'alcools gras et les triglycérides.

De préférence, la quantité d'agent lubrifiant est comprise entre 0,1% et 20% en poids du gel et, de préférence, entre 0,2% et 12% en poids.

Selon une autre variante, le piston comprend aussi un agent tensioactif constitué d'au moins un dérivé choisi parmi les dérivés siliconés, fluorés et phosphatés.

De préférence, ledit agent tensioactif est présent dans le gel en une quantité comprise entre 0,01% et 10% en poids et, de préférence, entre 0,1% et 5% en poids.

Selon encore une autre variante, le piston suiveur comprend, en outre, une charge minérale constituée de silice finement divisée présente en une quantité comprise entre 0,1% et 20% en poids, et de préférence, entre 0,5% et 10% en poids.

Une autre variante consiste à ajouter dans le piston suiveur des pigments ou colorants en une quantité comprise entre 0,1% et 20% en poids, et de préférence, entre 0,5% et 10% en poids.

Selon un autre mode de réalisation, le piston suiveur comprend un élément liquide ou en gel dans lequel est introduit au moins partiellement un élément solide poreux formé par extrusion et découpe d'un barreau en matière plastique obtenue à partir du mélange d'au moins un composant choisi parmi les polyoléfines, le polystyrène et l'ABS avec un agent d'expansion.

De préférence, ledit agent d'expansion est l'azodicarbonamide.

Selon encore un autre mode de réalisation, le piston suiveur comprend un élément liquide ou en gel dans lequel est introduit au moins partiellement un élément solide poreux formé par thermocollage de poudres de polyéthylène à haut poids moléculaire dans un moule sans compression.

Selon une variante de réalisation, le piston suiveur est constitué par la combinaison d'un élément en gel selon le premier mode et d'un élément solide selon les autres modes de réalisation exposés ci-dessus.

Un autre objet ne faisant pas partie de l'invention est un procédé de réalisation du piston suiveur défini ci-dessus dans un stylo du type comprenant un tube formant réservoir d'encre muni à une extrémité d'un porte-pointe et d'une pointe à bille, caractérisé en ce que :
- on introduit un milieu réactionnel liquide dans le tube par son extrémité ouverte opposée à la pointe au-dessus de l'encre en ajoutant éventuellement un catalyseur ;
- le cas échéant, on forme un élément solide et on l'introduit ensuite dans le tube au sein du milieu liquide, et
- on produit un élément en gel par réaction chimique du milieu liquide in situ.

Selon une première variante du procédé, on prépare le milieu réactionnel par mélange d'un premier composant liquide avec un second composant liquide de même nature chimique susceptibles de participer à une réaction chimique de condensation ou d'addition et notamment d'hydrosilylation.

Selon une autre variante du procédé, on accélère la gélification du milieu liquide par traitement thermique à une température comprise entre 50°C et 80°C pendant une durée comprise entre quelques minutes et quelques heures.

Lorsque l'élément en gel du piston de l'invention est préparé à partir d'un milieu constitué principalement de deux composants liquides réactifs de faible viscosité initiale, il se durcit après mélange des deux réactifs avec une cinétique qui est fonction des conditions de température, pour former un gel stable et homogène ayant une bonne tenue mécanique dans le tube.

Le milieu liquide obtenu immédiatement après mélange est facilement transférable, ce qui facilite l'introduction dans le réservoir ainsi que le dégazage, quel que soit le diamètre du tube. De ce fait, l'interface entre l'encre et le piston suiveur est parfaitement nette et définie, ce qui permet d'améliorer, outre l'aspect esthétique du tube, l'adhérence entre la colonne d'encre et le piston suiveur et par conséquent la résistance du système aux chocs éventuellement subis par la cartouche réservoir, par exemple, en cas de chute du stylo.

De plus, le mode de préparation des pistons suiveurs, selon l'invention par post-gélification, permet d'obtenir des compositions relativement dures et compactes (dont les propriétés sont proches de celles d'un élastomère). En effet, un gel correspond, à la différence d'une graisse, à un état épaissi irréversible où les liaisons internes sont de nature chimique en étant formées par réticulation. Ces pistons en gel suivent parfaitement le déplacement de la colonne d'encre, sans laisser de traces sur le réservoir, et donc sans perdre de leur épaisseur au cours des déplacements liés à l'écriture. Le piston suiveur de l'invention conserve ses propriétés du début à la fin de l'utilisation de la cartouche (stabilité de l'état de gel, débit du stylo, perméabilité, résistance aux chocs, tenue mécanique du piston suiveur dans le tube). Par ailleurs, les pistons formulés selon un mode de réalisation préféré, à partir de produits siliconés ne subissent que de faibles variations de dureté en fonction de la température.

Enfin, notons que les pistons de l'invention sont particulièrement flexibles, puisque leurs propriétés, en particulier leur dureté, peuvent être ajustées notamment par une variation du rapport entre les deux composants liquides initiaux. Ainsi, l'on peut adapter une composition de piston suiveur à un article d'écriture, sans modifier sa formulation initiale.

Ce piston en gel, qui comporte éventuellement un élément solide, sera utilisé, de préférence, en combinaison avec une encre de viscosité faible à moyenne, ou présentant des propriétés rhéofluidifiantes, placée dans un réservoir équipé à l'une de ses extrémités d'une pointe et ouvert à l'autre extrémité. Il évitera ainsi l'écoulement de l'encre par l'arrière du tube/réservoir, limitera l'évaporation des solvants volatils contenus dans l'encre, et permettra de contrôler le débit du stylo-bille.

Bien entendu, il est possible aussi de mettre en oeuvre le procédé de fabrication de l'élément en gel à partir d'un milieu ne contenant qu'un seul composant liquide susceptible de se gélifier in situ par réaction chimique initiée au moyen soit d'un traitement physique (irradiation, UV ou traitement thermique...) soit d'un agent de réticulation.

Un mode de fabrication de ce piston suiveur sera mis en oeuvre, de préférence, par mélange de deux réactifs fluides distincts A et B, gélification puis durcissage in situ pour obtenir une structure de gel élastomérique stable et homogène.

Le premier réactif A est alors constitué d'au moins un polymère siliconé comportant au moins deux fonctions éthyléniques insaturées et qui peut également comporter des radicaux méthyles, éthyles, phényles et/ou 3,3,3-trifluoropropyles. Ce composant A peut être choisi, par exemple, parmi les :
- poly(diméthylsiloxanes) terminés vinyidiméthyle, de viscosité à 25°C, comme toutes les viscosités exprimées par la suite, comprises entre 2 et 1 000 000 mPa.s (ex. : produits de la Société PETRARCH SYSTEM PS 443,PS 445),
- poly(diméthylsiloxanes) terminés vinylphénylméthyle, de viscosité comprise entre 1000 et 100 000 mPa.s (ex. produits PETRARCH SYSTEM PS 463),
- poly(diméthylsiloxanes) terminés divinylméthyle, de viscosité comprise entre 1000 et 100 000 mPa.s (ex. : produits PETRARCH SYSTEM PS 483, PS488),
- copolymères diméthylsiloxane/méthylvinylsiloxane terminés vinyldiméthyle (ex. :produits PETRARCH SYSTEM PS 493),
- copolymère diméthylsiloxane/méthylvinylsiloxane, terminés triméthylsiloxy, de viscosité comprise entre 250 et 300 000 mPa.s,
- copolymère diméthylsiloxane/diphénylsiloxane terminés vinyldiméthyle, de viscosité comprise entre 500 et 150 000 mPa.s (ex. : produit PETRARCH SYSTEM PS 735, PS 765, PS 784).

On utilisera, de préférence, des polymères ou copolymères siliconés terminés par plusieurs fonctions vinyle, de viscosité comprise entre 200 et 165 000 mPa.s, de préférence, 1000 et 5000 mPa.s, et contenant un minimum de 50% d'unités diméthylsiloxane.

Le cas échéant, la teneur en groupements vinyles du produit est comprise selon la viscosité du polymère, entre 0, 025 et 0,300 m Mol/g.

Les polymères peuvent contenir jusqu'à 3% de substances volatiles.

Le second réactif B est constitué d'au moins un polymère siliconé pourvu d'au moins deux fonctions Si-H.

Ce polymère siliconé peut être choisi, par exemple, parmi les :
- polyméthylhydrosiloxane, de viscosité comprise entre 1 et 1000 mPa.s (ex. : produits PETRARCH SYSTEM, PS 118, PS 122),
- copolymères diméthylsiloxane/méthylhydrosiloxane, de viscosité comprise entre 10 et 100 000 mPa.s (ex. : produits PETRARCH SYSTEM, PS 123, PS 124),
- copolymères phénylméthylsiloxane/méthylhydrosiloxane, de viscosité comprise entre 10 et 1000 mPa.s (ex. : produit PETRARCH SYSTEM PS 128.5),
- polyméthylsiloxane portant un atome d'hydrogène à leur extrémité, de viscosité comprise entre 1 et 20 000 mPa.s (ex. : produits PETRARCH SYSTEM, PS 542, PS 545).

Le composant B permettra, par mélange et réaction d'hydrosilylation avec le composant A dans le milieu liquide, de former un réseau tridimensionnel qui est à l'origine de l'état de "gel stable homogène".

On utilisera, de préférence, comme composant B, un polymère polyméthylhydrosiloxane ou un copolymère diméthylsiloxane/methylhydrosiloxane comportant au minimum trois groupements méthylhydrosiloxy par molécule, et de viscosité comprise entre 20 et 10 000 mPa.s.

On ajustera les quantités de composants A et B de telle sorte que le rapport entre le nombre de mol de fonctions éthyléniques insaturées ou vinyles et le nombre de mol de fonctions (Si-H) varie de 1:5 à 5:1 et de préférence de 1:3 à 3:1.

Afin de permettre, ou d'accélérer la réaction d'hydrosilylation ou bien d'améliorer son rendement, un catalyseur C sera ajouté au mélange A + B.

Ce catalyseur C est, par exemple, choisi parmi les :
- complexe platine/divinyltétraméthyldisiloxane, en solution dans un solvant (ex. : produit PETRARCH SYSTEM, PC 072),
- complexe platine/divinyltétraméthyldisiloxane mélangé à une solution de polydiméthylsiloxane terminé vinyle (ex. produit PETRARCH SYSTEM PC 075),
- complexe platine/cyclovinylméthylsiloxane en solution dans un vinylméthylsiloxane cyclique (ex. : produit PETRARCH SYSTEM PC 085).

Ce catalyseur sera présent en une quantité telle que l'apport de platine représente entre 0,1 et 1000ppm.

De préférence, le milieu réactionnel liquide comprend un agent diluant (I). Cet agent diluant est constitué d'un polymère siliconé inerte pouvant être choisi, par exemple, parmi les :
- polydiméthylsiloxane de viscosité comprise entre 1 et 2 500 000 mPa.s, de préférence entre 10 et 1 000 000 mPa.s (ex. : huiles NM1 de la Société SIVENTO),
- polyphénylsiloxane,
- polyméthylphénylsiloxane,
- copolymère diméthylsiloxane/diphénylsiloxane, de viscosité comprise entre 50 et 500 000 mPa.s (ex. : produits PETRARCH SYSTEM PS160, PS162).

On utilisera, de préférence, des polymères ou copolymères siliconés terminés par des groupements triméthylsiloxy.

Ce polymère qui agit comme diluant de la composition, permettra d'affiner les propriétés initiales du milieu liquide (viscosité) et finales du gel (dureté, propriétés lubrifiantes).

Il peut être avantageux dans certains cas, d'ajouter à la composition du piston un ou plusieurs autres additifs, tels que, notamment :
- une matière de charge D choisie par exemple parmi les silices, les talcs ou les carbonates de calcium.

On utilisera, de préférence, une silice finement divisée et, par exemple micronisée, ayant éventuellement subi un traitement hydrophobe dans une quantité comprise entre 0,1% et 20% en poids, de préférence, entre 0,5% et 10% en poids.

Cette charge permettra d'ajuster les propriétés physiques du gel (dureté en particules) et de réduire l'adhérence du gel sur la paroi du tube/réservoir du stylo.

Selon une variante de l'invention, le système (A+B+C+D+I), pourra être constitué par des systèmes siliconés bi-composants durcissables à température ambiante tels que les produits SIVENTO des gammes NG 3712, NG 3714 ou NG 3716 (commercialisés par HULS silicones).

Par ailleurs, il peut être avantageux dans certains cas d'ajouter à la composition du piston un ou plusieurs agents lubrifiants E choisis parmi :
- les huiles minérales blanches ou transparentes (ex. : les huiles SEMTOL type 70/28 à base d'hydrocarbures commercialisées par la Société WITCO),
- les huiles isoparaffiniques,
- les matières grasses telles que les esters d'acides gras, les esters d'alcools gras, triglycérides.

On utilisera, de préférence, une huile minérale, compatible avec le gel, c'est-à-dire ne présentant pas de problèmes d'exsudation en une quantité comprise entre 0,1% et 20% en poids, et de préférence, entre 0,2% et 12% en poids.

Cet agent lubrifiant assurera un bon suivi dans le tube du piston gel, en limitant son adhérence sur les parois.

L'ajout de cet agent peut se faire indifféremment dans le milieu liquide contenant les composants A,B avant mélange ou immédiatement après mélange. Toutefois, les produits pouvant contenir des composés soufrés, aminés
ou toute autre substance susceptible d'empoisonner le catalyseur d'hydrosilylation C seront, de préférence, ajoutés immédiatement après mélange de A et B, de manière à conserver à ce catalyseur, une activité constante sur une longue période de stockage.

Selon une autre variante de l'invention, il peut être intéressant d'ajouter à la composition un agent tensioactif F assurant la cohésion entre la colonne d'encre et le piston suiveur, afin d'améliorer la résistance aux chocs de l'ensemble. Cet additif, sera choisi par exemple parmi :
- les dérivés siliconés,
- les dérivés fluorés,
- les dérivés phosphatés.
   On utilisera cet additif en une quantité comprise entre 0,01% et 10% en poids, de préférence, 0,1% et 5% parties en poids. On introduira cet additif, de préférence, immédiatement après mélange de A et B.
   Selon encore une autre variante de l'invention, il peut être intéressant d'ajouter à la composition, une matière colorante G choisie, par exemple, parmi
- les pigments organiques : azoïques, phtalocyanines, quinacriolon,
- les pigments inorganiques : dioxyde de titane, oxyde de fer,
- les colorants organosolubles : Solvent Red 27, Solvent Blue 35.

Cet additif G ajouté, de préférence, immédiatement après mélange de A et B, sera utilisé de telle sorte que sa quantité soit comprise entre 0,1% et 20% en poids et de préférence 0,5% à 10% en poids.

Selon l'invention, d'autres réactions de gélification pourront être mises en oeuvre pour former le piston suiveur. Ces réactions, ainsi que les produits mis en jeu sont décrits par exemple dans le brevet US 5 079 300 (DUBROW et al) et comprennent par exemple :
(i) - une réaction entre fonctions silanol et silane : 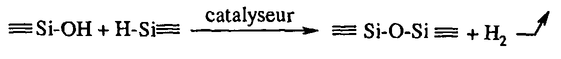
(ii) - une réaction entre fonctions silanol et alkoxy :

   ≡ Si-OH + R-O-Si ≡ → ≡ Si-O-Si ≡ + ROH
(iii) - une réaction entre fonctions silanol et énoxy : 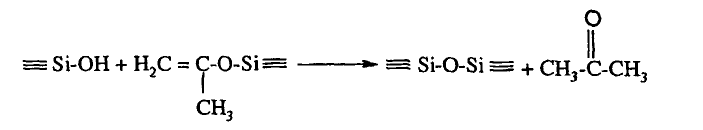
(iv) - une réaction entre fonctions silanol et amine : 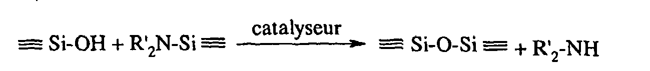
(v) - une réaction entre silanol et oxime :

   ≡ Si-OH + R"₂-C-N = O-Si ≡ → ≡ Si-O-Si + R"₂-C = N-O

De manière encore plus générale, le piston suiveur en gel peut être formé par réaction chimique catalysée, ou non, entre deux composants A et B choisis parmi les systèmes :
- polyuréthannes : décrits par exemple dans les brevets US 4 600 261 et US 4 634 207.
- époxy
- polyesters
- polybutyles
- polyacryliques.

Selon une autre variante de l'invention, il peut être intéressant d'ajouter un inhibiteur H de la réaction d'hydrosilylation afin d'augmenter la durée de conservation du composant liquide A. Cet inhibiteur peut être choisi par exemple parmi les :
- dialkyl décarboxylates (comme dans le US 4 256,870, US 4 476,166),
- dialkyl acetylène-dicarboxylates (comme dans le US 4 347,346),
- alcools acétyléniques (comme dans les US 3 989,866 et US 4 336,364),
- dérivés de benzotriozole,
- les vinylsiloxanes à chaîne courte

Les pistons suiveurs en gel ainsi obtenus se caractérisent par des valeurs de dureté correspondant à des valeurs de pénétration de cônes s'échelonnant de 100.10⁻¹ à 400.10⁻¹ mm, de préférence de 200.10⁻¹ à 360. 10⁻¹ mm (mesures réalisées à 25°C sur un pénétromètre PETROTEST PNR10, équipé d'un cône de 102.5g et d'un guide de 47.5g selon la norme DIN 51580).

D'autre part, le gel homogène ainsi réalisé peut également être "armé" ou "consolidé" par un élément solide au moins partiellement introduit dans ledit élément en gel ou dans un élément liquide quelconque formant le support où, bien que stable, il conserve une faible mobilité relative. Ce mode de réalisation présente un intérêt particulier dans les cas où le gel aurait tendance à se déformer en son centre. Ce phénomène peut, par exemple, être observé sur des réservoirs de diamètre important, lorsque l'élément en gel du piston suiveur est soumis à la dépression créée par l'écoulement de l'encre vers la pointe.

Afin d'assurer cette fonction, l'élément solide doit présenter une densité apparente inférieure ou égale à la densité de l'élément liquide ou en gel. En revanche, la forme de l'élément solide et sa couleur (blanche ou colorée) peuvent être quelconques, avec une section cylindrique, ou polygonale (carrée, triangulaire, hexagonale). Par ailleurs, l'élément solide est poreux et peut comporter des évidements coaxiaux permettant un meilleur ajustement de la densité apparente.

L'élément solide est constitué de différents matériaux, en mélange ou superposés, par exemple collés ou soudés. De préférence, l'élément solide sera fabriqué selon l'un des deux procédés présentés ci-dessous :
1). Par extrusion et découpe d'un barreau de matière plastique obtenue à partir du mélange d'au moins un composant choisi parmi les polyoléfines, le polystyrène avec un agent d'expansion constitué de préférence de l'azodicarbonamide. Sous l'effet de la température, l'agent d'expansion se décompose en libérant des bulles de gaz (azote), créant ainsi des pores, de types "pores fermés" au sein de la matière. La densité de l'élément solide ne pas selon l'invention est ajustée par le choix du matériau de base, et la quantité d'agent d'expansion introduite, de telle sorte qu'il vienne se positionner automatiquement à la surface de l'élément liquide ou en gel. Ainsi l'on peut atteindre pour l'élément solide des densités apparentes comprises entre 0,5 et 1,0, voire davantage si la matière plastique est préalablement chargée. Cet élément solide, mobile sera, le cas échéant, utilisé en combinaison avec des éléments liquides ou en gel dont la densité varie entre 0,8 et 1,1.
2). Par thermocollage de poudres de polyéthylène à haut poids moléculaire, comme par exemple l'Hostalen GUR 8020 de TARGOR (commercialisé par la société HOECHST), dans un moule sans compression. Sous l'effet de la chaleur, ces poudres vont fondre superficiellement et adhérer entre elles pour constituer un réseau poreux formé de "pores ouverts". Dans ce cas, la densité de l'élément solide est déterminée par la nature du matériau le constituant. Afin de positionner l'élément solide à la surface de l'élément de support liquide ou en gel. La densité est maintenue à une valeur légèrement inférieure à celle de l'élément de support, qui a alors la possibilité de pénétrer à l'intérieur des pores.

Par ailleurs, selon une autre variante, on réalisera l'élément solide avec tout matériau permettant l'obtention de mousses (telles que les mousses polyuréthanne).

Les pistons suiveurs développés dans le cadre de cette invention pourront être utilisés dans des stylos-bille munis de tubes/réservoirs de diamètre variable, s'échelonnant de 1 à 30 mm, voire davantage.

Ces stylos-bille sont fabriqués à partir de plusieurs étapes :
- dans un premier temps, le tube formant réservoir d'encre est muni à une extrémité d'un porte-pointe et d'une pointe à bille,
- puis, l'encre est introduite dans le réservoir,
- le milieu liquide réactionnel est ensuite préparé par exemple en mélangeant les composants A et B, le catalyseur C et les additifs D à I selon des ratios prédéterminés. Le milieu réactionnel peut aussi être constitué d'un unique composant associé à un agent ou à un traitement de gélification.
   Selon une première méthode, le mélange réactionnel ainsi obtenu est immédiatement introduit dans le tube/réservoir contenant l'encre, par l'extrémité opposée à la pointe, au moyen d'au moins une pompe doseuse (non représentée). Selon une autre méthode, le piston suiveur est introduit dans le tube au moyen de deux pompes doseuses après mélange en continu et début de réaction. Cette seconde méthode évite le durcissage du gel dans le réservoir en cas d'arrêt de la chaîne d'assemblage. Dans tous les cas, la cinétique de la réaction entre les composants du milieu liquide étant relativement lente, c'est essentiellement dans le tube/réservoir, c'est-à-dire in situ et non pendant le transfert du milieu liquide, que se forme par réaction chimique l'élément en gel.
   Lorsque les caractéristiques du stylo le nécessitent, on peut introduire dans le milieu liquide un élément solide du type décrit plus haut,
- lorsque l'élément solide possède des pores ouverts, le milieu liquide pénètre dans la structure poreuse pour remplir les pores, ce qui augmente sa densité et le stabilise,
- le tube contenant l'encre et le piston suiveur est ensuite dégazé par centrifugation, pendant que le milieu liquide est encore suffisamment fluide,
- dans une étape de finition, l'élément en gel du piston suiveur subit une opération de durcissage accéléré par voie thermique, à une température comprise entre 50° et 80°C. En fonction des conditions de gélification choisies, cette opération peut nécessiter de quelques minutes à quelques heures.

### EXEMPLES

L'efficacité des pistons suiveurs cités dans les exemples 1 à 14 et en exemples comparatifs 1 et 2 a été évaluée à partir de stylos-bille réalisés comme suit :
- remplissage du tube réservoir de diamètre intérieur 5,0 mm avec de l'encre (voir tableau 1) pour former une cartouche
- fixation de la pointe sur le stylo,
- introduction du piston suiveur dans la cartouche sous forme d'un milieu liquide réactionnel ou d'une graisse (dans le cas des exemples comparatifs), dont la viscosité est comprise entre 10mPas et 10 000 mPas.
- centrifugation de la cartouche à 2 000 tr/min durant 10 min.

La formule de l'encre utilisée lors de la préparation des cartouches est donnée dans le tableau 1 ci-dessous :

**TABLEAU 1**

| Constituants | Quantités (% en poids) |
|---|---|
| Matière colorante | 8,0 |
| Eau | 68,9 |
| Cosolvant | 20,0 |
| Résine | 2,0 |
| Agent anti-corrosion | 1,0 |
| Bactéricide | 0,1 |

Des modes de réalisation des pistons suiveurs en gel selon la présente invention sont donnés dans les exemples suivants :

### Exemple 1

Ces pistons sont obtenus en mélangeant deux produits liquides (1, 2) fabriqués et commercialisés par la Société SIVENTO sous les formulations de références générales NG3712 et NG3716.

### PRODUIT 1 :

Fraction (1) du composant A, 29,0% de polydiméthylsiloxane terminé vinyle de viscosité 1000 mPa.s.
Fraction (1) de l'agent diluant (I), 67,9% de polydiméthylsiloxane terminé triméthylsiloxy de viscosité 1000 mPa.s.
Composant C, 0,2% d'un catalyseur contenant 1% de platine.
Composant D, 2,9% de silice traitée hydrophobe.

### PRODUIT 2 :

Fraction (2) du composant A, 48,1% d'un polydiméthylsiloxane terminé vinyle de viscosité 1000 mPa.s
Fraction (2) de l'agent diluant (I), 48,5% d'un polydiméthylsiloxane à terminaison triméthylsiloxy de viscosité 1000 mPa.s.
   - Composant B, 0,5% d'un copolymère diméthylsiloxane/méthylhydrosiloxane contenant 0,7% de groupements méthylhydrosiloxane.
   - Composant D, 2,9% de silice traitée hydrophobe.

Les deux produits liquides 1 et 2 sont mélangés sous faible agitation de telle sorte que le ratio en poids produit 1/ produit 2 soit de 1.32. Le milieu réactionnel liquide résultant du mélange est introduit dans le réservoir du stylo au-.dessus de l'encre. L'ensemble est ensuite centrifugé 10 mn à 2000 t/mn puis stocké à 50°C durant 18 heures pour une gélification complète du piston suiveur.

Le tableau 2 regroupe des exemples de pistons suiveurs selon l'invention.

**TABLEAU 2**

| CONSTITUANTS | Ex.1 | Ex. 2 | Ex.3 | Ex. 4 | Ex. 5 | EX.6 | EX. 7 | Ex. 8 | Ex.9 | Ex.10 | Ex.11 | Ex.12 | Ex.13 | Ex.14 |
|---|---|---|---|---|---|---|---|---|---|---|---|---|---|---|
| PRODUIT 1 SIVENTO NG 3712 S3 | 57% | 20 % | 15 % | 15 % | | | | | | | | | | |
| PRODUIT 2 SIVENTO NG 3712 S3 | 43% | 30 % | 30 % | 30 % | | | | | | | | | | |
| PRODUIT 1 SIVENTO NG 3712 S6 | | | | | 50 % | 27,5 % | | | | | | | | |
| PRODUIT 2 SIVENTO NG 3712 S6 | | | | | 50 % | 22,5 % | | | | | | | | |
| PRODUIT 1 SIVENTO NG 3712 S7 | | | | | | 27,5 % | | | | | | | | |
| PRODUIT 2 SIVENTO NG 3712 S7 | | | | | | 22,5 % | | | | | | | | |
| PRODUIT 1 SIVENTO NG 3712S8 | | | | | | | 50 % | 54 % | | | | | | |
| PRODUIT 2 SIVENTO NG 3712S8 | | | | | | | 45 % | 41 % | | | | | | |
| PRODUIT 1 SIVENTO NG 3712 S1 | | | | | | | | | 17% | 66,7 % | | | | |
| PRODUIT 2 SIVENTO NG 3712 S1 | | | | | | | | | 83% | 33,3% | | | | |
| PRODUIT 1 SIVENTO NG 3716 S1 | | | | | | | | | | | 50% | 45% | | |
| PRODUIT 2 SIVENTO NG 3716 S1 | | | | | | | | | | | 45% | 45% | | |
| PRODUIT 1 SIVENTO NG 3716 S4 | | | | | | | | | | | | | 50% | 45% |
| PRODUIT 2 SIVENTO NG 3716 S4 | | | | | | | | | | | | | 50% | 55% |
| E/ huile silicone NM1.1000 | | 50 % | | | | | | | | | | | | |
| E/ huile silicone NM1.5000 | | | 55 % | | | | | | | | | | | |
| E/ huile silicone NM1.10000 | | | | 55 % | | | | | | | | | | |
| E/huile isoparaffinique SEMTOL | | | | | | | 5 % | 5 % | | | 5% | 10% | | |

| CONDITIONS DE GELIFICATION | | | | | | | | | | | | | | |
|---|---|---|---|---|---|---|---|---|---|---|---|---|---|---|
| à 50°C | 18h | 18h | 18h | 18h | 12h ou 4 jours | 4h ou 4 jours | 4h ou 2 jours | 4h ou 2 jours | 20h ou 7 jours | 20h ou 7 jours | 4h ou 2 jours | 4h ou 2 jours | 4h ou 2 jours | 4h ou 2 jours |
| à 22°C | | | | | | | | | | | | | | |
| à 20°C | | | | | | | | | | | | | | |

| | | | | | | | | | | | | | | |
|---|---|---|---|---|---|---|---|---|---|---|---|---|---|---|
| * Les produits 1 et 2 des exemples 1 à 14 sont obtenus à partir des produits SlVENTO des gammes NG3716 et NG3716 dont les formulations génériques sont données dans les exemples 1 et 2. | | | | | | | | | | | | | | |

Deux compositions de pistons suiveurs monocomposant de types graisses de l'art antérieur ont été évaluées parallèlement au mode de réalisation bicomposants de l'invention.

### Exemple comparatif 1

| | |
|---|---|
| Huile de silicone NM1.5000 : | 94,6 % |
| Silice micronisée traité hydrophobe : | 5,2 % |
| Tensioactif siliconé modifié polyéther : | 0,2 % |

La silice est dispersée dans l'huile sous forte agitation mécanique, afin d'obtenir une graisse parfaitement homogène.

### Exemple comparatif 2

| | |
|---|---|
| Polybutène : | 41,0 % |
| Huile minérale : | 55,7 % |
| Stéarate d'aluminium : | 3,3 % |

La graisse ainsi préparée par mélange est ensuite broyée.

Les pistons suiveurs décrits ci-dessus sont ensuite soumis à divers tests :

### Evaluation de la viscosité du mélange liquide initial :

Cette viscosité est mesurée à 20°C à 1,S⁻¹ avec un rhéomètre HAAKE Rheostren RS150 muni d'un système cône et plateau C60/1 (pour les ex. 1 à 14) ou C20/1 (pour les ex. comparatifs 1 et 2)

### Evaluation du procédé de réalisation du piston suiveur dans le tube/réservoir :

Le barème suivant permet d'évaluer de manière qualitative la facilité de mise en oeuvre des opérations de transfert, d'introduction dans le tube/réservoir du stylo-bille et de dégazage du piston suiveur. L'échelle d'appréciation de ces critères est établie comme suit :
4 : transfert, introduction dans le tube et dégazage aisés.
3 : transfert, introduction dans le tube aisés, dégazage moyen.
2 : transfert aisé, introduction dans le tube et dégazage moyens.
1 : transfert, introduction dans le tube et dégazage possibles mais difficiles.
0 : transfert, introduction dans le tube et dégazage très difficiles, voire impossibles.

### Performances de l'effet piston sur l'encre :

On étudie les performances de l'effet piston du suiveur sur l'encre en faisant subir aux stylos-bille un test d'écriture automatisé sur 4 x 100 m d'écriture, en mesurant le débit d'encre tous les 100 m. On évalue ainsi la régularité d'écriture en considérant l'évolution du débit du stylo entre 100 et 400 m, selon :
4 : variation de débit ≤ 2 %.
3 : 2 % < variation de débit ≤ 5 %.
2 : 5 % < variation de débit ≤ 10 %.
1 : 10 % < variation de débit ≤ 15 %.
0 : variation de débit > 15 %.

### Esthétique du stylo-bille :

L'aspect du stylo-bille sera évalué à partir de deux indicateurs que sont :
- l'aspect du tube (ou "clear-drain") après un écoulement de hauteur donnée de la colonne d'encre et du piston suiveur (dans notre cas 400 m d'écriture automatique). Ce test est noté comme suit :
   4 : aucune trace sur le tube.
   3 : présence d'un résidu de piston suiveur au niveau de sa position initiale.
   2 : présence de faibles traces de piston suiveur et/ou d'encre.
   1 : présence de traces importantes de piston suiveur et/ou d'encre le long du tube.
   0 : tube régulièrement taché par le piston suiveur et/ou par l'encre.
- l'aspect de l'interface encre/piston suiveur avant et après les 400 m d'écriture.
   4 : interface parfaitement régulière et horizontale.
   3 : interface régulière, inclinée.
   2 : interface relativement régulière.
   1 : interface irrégulière, relativement horizontale.
   0 : interface irrégulière comportant cratère(s) ou bulle(s) d'air.

### Résistance aux chocs du stylo-bille :

Afin de vérifier la résistance aux chocs des stylos, on les fait tomber à trois reprises d'une hauteur de 1,5 m sur un sol en béton, de manière que le choc intervienne à leur extrémité arrière. On évalue chaque stylo après les chocs, d'après l'échelle ci-dessous :
4 : système non modifié, écriture immédiate possible.
3 : léger retrait de l'ensemble encre + piston suiveur, avec léger retard au démarrage de l'écriture.
2 : léger retrait avec déformation du piston suiveur.
1 : retrait et/ou déformation important(e)(s) du piston suiveur.
0 : écoulement d'encre par l'arrière du tube.

### Influence de la température :

### a) Viscosité

Afin de juger de l'influence de la température sur la viscosité des pistons suiveurs, on mesure la viscosité des compositions à 20°C et 50°C.

Ces mesures sont effectuées sur un rhéomètre HAAKE Rheostress RS 150, muni d'un système cône/plan de 20 mm, à un gradient de cisaillement de 1 s⁻¹.

### b) Dureté

L'influence de la température sur la dureté des pistons suiveurs en gel des exemples 1 à 14 est déterminée en mesurant les variations de dureté au moyen d'un pénétromètre PETROTEST PNR10 équipé d'un cône de 102,5g et d'un guide de 47,5g.

Les résultats des tests seront exprimés en % de variation de la viscosité ou de la dureté entre 20 et 50°C, selon le barème :
4 : variation 20-50°C ≤ 5 %.
3 : 5 % < variation 20-50°C ≤ 10 %.
2 : 10 % < variation 20-50°C ≤ 20 %.
1 : 20 % < variation 20-50°C ≤ 30 %.
0 : variation 20-50°C > 30 %.

### Tenue dans le tube du piston suiveur :

Afin de vérifier si, quelles que soient les conditions de stockage (position, température), le piston suiveur reste en place dans le tube, empêchant ainsi l'écoulement de l'encre, chaque stylo-bille a été placé pointe en l'air dans une étuve thermostatée à 55°C.

Les stylos ont été examinés après une semaine de stockage, et notés selon les critères suivants :
4 : aucun retrait du système encre + piston suiveur.
3 : léger retrait du système encre + piston suiveur.
2 : retrait et/ou déformation du système encre + piston suiveur.
1 : retrait et/ou déformation important(e)(s) du système encre + piston suiveur.
0 : écoulement d'encre par l'arrière du tube.

### Note moyenne globale du piston suiveur :

Il s'agit de la moyenne arithmétique des notes caractérisant chaque test.

Les résultats de l'ensemble de ces tests sont présentés dans le tableau 3.

**TABLEAU 3**

| Résultats des tests réalisés sur les pistons suiveurs mono- et bicomposants | | | | | | | | | | | |
|---|---|---|---|---|---|---|---|---|---|---|---|
| | Viscosité milieu liquide initial | Dureté Gel final à 25°C | Dureté Voland Gel final | Procédé | Régularité débit | Aspect | Interface | Résistance aux chocs | Influence de la température | Tenue dans le tube ↑ à 50°C | Note moyenne globale |
| Exemple 1 | 1360 mPa.s | 332 10⁻¹ mm, | 5,2 g | 4 | 3 | 3 | 4 | 4 | 3 | 4 | 3,6 |
| Exemple 2 | 950 mPa.s | 345 10⁻¹ mm | 4,3 g | 4 | 4 | 3 | 4 | 3 | 3 | 3 | 3,4 |
| Exemple 3 | 1280 mPa.s | 277 10⁻¹ mm | 10,9 g | 4 | 3 | 3 | 4 | 3 | 4 | 3 | 3,4 |
| Exemple 4 | 2215 mPa.s | 255 10⁻¹ mm | 14,8 | 3 | 3 | 3 | 3 | 3 | 4 | 4 | 3,3 |
| Exemple 5 | 1350 mPa.s | 295 10⁻¹ mm | 8,5 g | 4 | 3 | 3 | 3 | 3 | 3 | 4 | 3,3 |
| Exemple 6 | 1400 mPa.s | 281 10⁻¹ mm | 10,3 g | 4 | 4 | 3 | 4 | 4 | 4 | 4 | 3,8 |
| Exemple 7 | 1110 mPa.s | 302 10⁻¹ mm | 7,7 g | 4 | 4 | 4 | 4 | 4 | 3 | 4 | 3,8 |
| Exemple 8 | 1090 mPa.s | 325 10⁻¹ mm | 5,6 g | 4 | 4 | 4 | 4 | 4 | 4 | 4 | 4,0 |
| Exemple 9 | 1690 mPa.s | 100 10⁻¹ mm | 126,2 g | 3 | 3 | 3 | 4 | 3 | 3 | 4 | 3,4 |
| Exemple 10 | 1540 mPa.s | 400 10⁻¹ mm | 2,0 g | 4 | 3 | 3 | 3 | 3 | 3 | 3 | 3,1 |
| Exemple 11 | 1325 mPa.s | 306 10⁻¹ mm | 7,3 g | 4 | 3 | 3 | 4 | 3 | 4 | 4 | 3,6 |
| Exemple 12 | 1568 mPa.s | 318 10⁻¹ mm | 6,2 g | 4 | 3 | 3 | 4 | 3 | 3 | 3 | 3,3 |
| Exemple 13 | 1230 mPa.s | 327 10⁻¹ mm | 5,5 g | 4 | 4 | 3 | 4 | 3 | 4 | 4 | 3,7 |
| Exemple 14 | 1290 mPa.s | 315 10⁻¹ mm | 6,5 g | 4 | 4 | 4 | 4 | 4 | 4 | 4 | 4,0 |
| Exemple comparatif 1 | 185225 mPa.s | >400 10⁻¹ mm | <2,0 g | 2 | 3 | 2 | 2 | 3 | 4 | 3 | 2,7 |
| Exemple comparatif 2 | 284885 mPa.s | >400 10⁻¹ mm | <2,0 g | 1 | 2 | 0 | 1 | 1 | 0 | 0 | 0,7 |

## Revendications

1. Piston suiveur pour stylo à bille, **caractérisé en ce qu'**il comprend un élément liquide ou en gel dans lequel est introduit au moins partiellement un élément solide **caractérisé en ce que** l'élément solide est constitué d'un réseau de pores ouverts.

2. Piston suiveur selon la revendication 1, **caractérisé en ce que** la densité apparente de l'élément solide est comprise entre 0,5 et 1,0.

3. Piston suiveur selon la revendication 1 ou 2, **caractérisé en ce que** ledit élément solide est constitué de poudres de polyéthylène à haut poids moléculaire thermocollées.

4. Piston suiveur selon la revendication 1 ou 2, **caractérisé en ce que** l'élément solide est constitué d'une mousse de polyuréthanne.

5. Piston suiveur selon l'une des revendications précédentes, **caractérisé en ce que** la densité de l'élément solide est inférieure à celle de l'élément liquide en gel.

6. Piston suiveur selon l'une des revendications précédentes, **caractérisé en ce que** la densité de l'élément liquide ou en gel est comprise entre 0,8 et 1,1.

## Claims

1. Piston follower for a ballpoint, **characterized in that** it comprises a liquid or gel element in which is introduced at least partially a solid element, **characterized in that** the solid element is made up of open cell network.

2. Piston follower according to claim 1, **characterized in that** the apparent density of the solid element ranges between 0.5 and 1.0.

3. Piston follower according to claim 1 or 2, **characterized in that** said solid element is made up of high molecular weight heat sealed polyethylene powders.

4. Piston follower according to claim 1 or 2, **characterized in that** the solid element is made up of polyurethane foam.

5. Piston follower according to one of the preceding claims, **characterized in that** the solid element density is lower than that of the gel liquid element.

6. Piston follower according to one of the preceding claims, **characterized in that** the liquid element or gel element density ranges between 0.8 and 1.1.

## Patentansprüche

1. Folgekolben für einen Kugelschreiber, **dadurch gekennzeichnet, daß** er ein flüssiges oder gelförmiges Element enthält, in das wenigstens teilweise ein festes Element eingeführt wird, **dadurch gekennzeichnet, daß** das feste Element von einem Netz aus offenen Poren gebildet ist.

2. Folgekolben nach Anspruch 1, **dadurch gekennzeichnet, daß** die Rohdichte des festen Elements zwischen 0,5 und 1,0 beträgt.

3. Folgekolben nach Anspruch 1 oder 2, **dadurch gekennzeichnet, daß** das feste Element von schmelzfixierten Polyethylenpulvern mit hohem Molekulargewicht gebildet ist.

4. Folgekolben nach Anspruch 1 oder 2, **dadurch gekennzeichnet, daß** das feste Element von einem Polyurethanschaum gebildet ist.

5. Folgekolben nach einem der vorhergehenden Ansprüche, **dadurch gekennzeichnet, daß** die Dichte des festen Elements geringer als die Dichte des flüssigen oder gelförmigen Elements ist.

6. Folgekolben nach einem der vorhergehenden Ansprüche, **dadurch gekennzeichnet, daß** die Dichte des flüssigen oder gelförmigen Elements zwischen 0,8 und 1,1 beträgt.
